# EUROPÄISCHE PATENTANMELDUNG

(11) **EP 1 004 375 A2**
(43) Veröffentlichungstag der Anmeldung: **31.05.2000**
(21) Anmeldenummer: 99123135.8
(22) Anmeldetag: 19.11.1999
(51) Int. Cl.: B22F 3/11

(54) **Metallschaumfügeverfahren**

(30) Priorität: 24.11.1998 DE 19854175
(71) Anmelder: Streuber, Fritz Michael, 32120 Hiddenhausen (DE)
(72) Erfinder: Streuber, Fritz Michael, 32120 Hiddenhausen (DE)
(74) Vertreter: Schwabe - Sandmair - Marx

(57) **Zusammenfassung**

In einem Metallschaumfügeverfahren zum Verbinden von Formkörpern werden ein erster Formkörper (1) und ein zweiter Formkörper (2) relativ zueinander fixiert. Mittels einer Fügeklammer (10) wird in einem Fügebereich der Formkörper (1, 2) eine Umschalung eines Raums (9) gebildet, in dem aufschäumbares Metallschaummaterial (17) angeordnet ist. Das Metallschaummaterial wird in die Umschalung aufgeschäumt. Dadurch werden die Formkörper (1, 2) zu einem Verbundkörper verpresst.

## Beschreibung

Die Erfindung betrifft ein Metallschaumfügeverfahren, einen durch Aufschäumen eines Metallschaummaterials gebildeten Formkörperverbund und eine Fügeklammer zum Verklammern der zu verbindenden Formkörper.

Insbesondere im Leichtbau stellt sich seit jeher ein Problem, Einzelstrukturen - im folgenden Formkörper genannt - den Erfordernissen des späteren Einsatzes entsprechend zu verbinden, nicht zuletzt wegen der Forderung nach geringem Gewicht bei gleichzeitig hoher mechanischer Belastbarkeit und Standfestigkeit sowie möglichst geringen Kosten. Das Problem stellt sich grundsätzlich auch in anderen Bereichen, beispielsweise Schiffsbau, wo besonders großflächige Formkörper, beispielsweise Rumpfsegmente, miteinander zu verbinden sind, obgleich auch dort stets die Forderung nach möglichst wenig Eigengewicht bei gleichzeitig möglichst hoher mechanischer Belastbarkeit solcher Formkörper und daraus zusammengesetzter Verbundkörper besteht.

Eine Möglichkeit der Gewichtseinsparung stellt der Einsatz von Formkörpern aus aufgeschäumtem Metallschaummaterial oder Anteilen solcher Materialien dar. Durch die Porenstruktur des aufgeschäumten Metallschaums besitzt ein Metallschaumformkörper ein geringeres Gewicht als ein aus vollem Material hergestellter Formkörper bei nach wie vor hoher mechanischer Belastbarkeit. Daneben besitzt Metallschaummaterial eine ganze Reihe weiterer vorteilhafter Eigenschaften, wie beispielsweise hohe Stoßabsorptionsfähigkeit, Schallabsorptionsfähigkeit, sowie eine gegenüber dem vollem Material verringerte Wärmeleitfähigkeit und elektrische Leitfähigkeit. Metallschaummaterialien und daraus hergestellte Halbzeuge und Formkörper sind beispielsweise aus der DE 41 01 630 C2, der DE 43 18 540 AI, der DE 44 16 371 A1, der DE 44 26 627 A1, der DE 196 12 781 01 C 1 und der DE 197 17 894 A1 bekannt. In der DE 43 18 540 A1 wird die Verwendung von Metallschaummaterial im Kraftfahrzeugbau vorgeschlagen. Karosseriebleche werden als Metallschaumformkörper mit einer vollmetallischen Deckschicht und einer aufgeschäumten Metallschaumschicht verwendet. Zum Befestigen von Anbauteilen an diesen Karosserieblechen werden Blechschrauben und dübelartige Befestigungselemente erwähnt. Auch die DE 196 12 781 C 1 betrifft Formkörper für Fahrzeuge. In dem Band "Metallschäume 1997", MIT Bremen, werden im Beitrag "Joining of Aluminium Foams" von N. Sedliakova et al. als Verbindungsmethoden für Metallschaumformkörper, Schraubverbindungen, Löt-, Kleb- und Schweißverbindungen sowie die Verwendung von eingeschäumten Befestigungselementen beschrieben. Dies sind die zum Verbinden von Formkörpern in der Technik bewährten Verfahren mit ihren hinlänglich bekannten Vor- und Nachteilen.

Aufgabe der Erfindung ist es, einen besonders festen Verbund von Formkörpern zu schaffen und die hierfür erforderliche Verbindungstechnik bereit zu stellen.

Diese Aufgabe wird durch ein Verfahren nach Anspruch 1 gelöst. Einen mit diesem Verfahren erhaltenen Verbund von Formkörpern beschreibt Anspruch 7. Anspruch 11 betrifft ein besonders bevorzugtes Hilfsmittel zum Herstellen des Verbunds.

Nach der Erfindung werden Formkörper in einem Fügeverfahren mit Hilfe eines Metallschaummaterials zu einem festen Verbundkörper verpresst. Hierzu werden die zu verbindenden Formkörper in einem ersten Schritt in ihrer für den Verbund gewünschten Lage relativ zueinander fixiert, vorzugsweise werden sie miteinander verklammert. In ihrem Fügebereich wird mittels einer Fügeklammer ein Raum, insbesondere ein Hohlraum, begrenzt und dadurch umschalt, in dem aufschäumbares Metallschaummaterial angeordnet ist. Das Metallschaummaterial kann vor dem Fügeklammern, während oder auch nach dem Fügeklammern in den durch die Fügeklammer umschalten Raum eingebracht werden. In einem zweiten Schritt wird das aufschäumbare Metallschaummaterial aufgeschäumt, was vorzugsweise durch Erhitzen auf die Aufschäumtemperatur des Metallschaummaterials erfolgt. Durch die mit dem Aufschäumen einhergehende Volumenvergrößerung des Metallschaummaterials und deren Begrenzung durch die ausreichend feste Umschalung werden die Formkörper zu einem Verbundkörper verpresst.

Bei einem erfindungsgemäßen Formkörperverbund sind die Formkörper mittels einer Fügeklammer zusammengefügt, die eine Schalung für ein bei dem Herstellen des Verbunds aufgeschäumtes Metallschaummaterial bildet. Die Fügeklammer bildet zumindest einen Teil einer Begrenzung eines Raums, in dem sich das Metallschaummaterial bei seinem Aufschäumen ausbreiten kann. Durch die Volumenvergrößerung des Metallschaummaterials in den durch die Schalung vorgegebenen Grenzen sind die Formkörper zu dem Verbund verpresst.

In einer ersten bevorzugten Ausführungsform wird als Fügeklammer eine vorgefertigte separate Fügeklammer verwendet. Diese separate Fügeklammer wird an die zu verbindenden Formkörper angelegt, die vorzugsweise bereits zuvor in der Form des späteren Verbunds passend zueinander angeordnet worden sind, indem sie die Formkörper oder zumindest Teile der Formkörper umgreift. Dabei kann die Fügeklammer die zu verbindenden Formkörper bereits klemmend in ihrer für den Verbund gewünschten relativen Lage zueinander fixieren. Eine nicht klemmende Anbringung der Fügeklammer ist jedoch ebenfalls möglich.

Nach einem zweiten bevorzugten Ausführungsbeispiel wird die Fügeklammer durch entsprechende Ausbildung der Formkörper selbst gebildet, so dass die Anbringung eines separaten Verbindungsteils, vorzugsweise die vorgenannte separate Fügeklammer, entfallen kann. Die Fügeklammer ist in diesem Fall integrierter Bestandteil eines der Formkörper oder wird im Zusammenwirken der Formkörper gebildet.

Das aufschäumbare Metallschaummaterial kann Bestandteil eines einzelnen, von mehreren oder von allen am Verbund beteiligten Formkörpern sein. So wird ein bevorzugt verwendeter Formkörper aus einem plattenförmigen Schichtmaterial gefertigt, das wenigstens eine Schicht eines aufschäumbaren Metallschaummaterials und eine angrenzende Deckschicht eines damit metallurgisch verträglichen Vollmetallmaterials aufweist. Aus solchem Halbzeug wird durch bekannte Verformungsverfahren, insbesondere Kaltverformung, ein Formkörper im Sinne der Erfindung hergestellt. Typischerweise werden das Schaum- und das Vollmaterial jeweils durch das gleiche Metall oder die gleiche metallische Legierung gebildet, beispielsweise aufschäumbarer Aluminiumschaum und Vollaluminium. Jede verträgliche ungleiche Materialpaarung ist für die Zwecke der Erfindung jedoch ebenso verwendbar, wobei vorzugsweise die Aufschäumtemperatur des Schaummaterials unterhalb der Schmelztemperatur des Vollmaterials liegt. Das Schaummaterial eines oder mehrerer Formkörper kann auch bereits vor dem Verbinden aufgeschäumt sein. Ein oder mehrere der zu verbindenden Formkörper können auch nur aus Metallschaummaterial bestehen.

Die Erfindung ist jedoch nicht auf die Anwendung bei Formkörpern, die Metallschaummaterialien enthalten, beschränkt, sondern mit Vorteil auch bei metallischen Formkörpern ohne Schaummaterial, beispielsweise bei herkömmlichen Blechen und sonstigen Profil- oder Schalenkörpern, einsetzbar. Es kann sich beispielsweise auch um einen durch Sintern oder Gießen erhaltenen Formkörper handeln. Die Erfindung ist, obgleich bevorzugt, jedoch nicht ausschließlich auf die Verbindung von metallischen Formkörpern beschränkt. Grundsätzlich kann mittels der erfindungsgemäßen Fügeverbindung jede Art von Formkörpern zu einem erfindungsgemäßen Verbund zusammengefügt werden, solange diese Formkörper bei der Aufschäumtemperatur des jeweils verwendeten Schaummaterials nicht zerstört werden; vorzugsweise sollten sie bei der Aufschäumtemperatur formstabil bleiben.

Durch die Fügeklammer wird im Fügebereich ein Raum begrenzt bzw. umschalt, in den vor, bei oder nach dem Positionieren der Fügeklammer ein Ergänzungsprofil aus einem aufschäumbaren Metallschaummaterial eingelegt werden kann. Durch Einlegen eines passenden Ergänzungsprofils kann Schaummaterial in Bezug auf den Aufschäumvorgang und den späteren Pressverbund in optimierter Menge und Form in den Fügebereich eingebracht werden. Falls die zu verbindenden Formkörper selbst keine aufschäumbaren Metallschaummaterialien im Fügebereich enthalten, wird Schaummaterial auf diese Weise zumindest durch ein Ergänzungsprofil geliefert.

Als weiteres oder auch einziges Mittel zum Einbringen von aufschäumbaren Metallschaummaterial in den Fügebereich kann auch eine vorgefertigte separate Fügeklammer dienen.

Eine erfindungsgemäße, separate Fügeklammer weist in einem Hohlzylinderprofil eine Schicht eines aufschäumbaren Metallschaummaterials und eine diese Aufschäumschicht umgebende Deckschicht auf, die das Metallschaummaterial der derart eingehüllten Aufschäumschicht bei einem Aufschäumen einschalt. In ihrer einfachsten Ausführungsform kann solch eine Fügeklammer in der Art einer Muffe zum Verbinden von zwei stirnseitig aneinander stoßenden zylindrischen Formkörpern verwendet werden. Vorzugsweise ist die Fügeklammer jedoch in ihrem Hohlzylinderprofil mit einer Öffnung versehen. Die Öffnung erstreckt sich vorteilhafterweise bis wenigstens zu einem stirnseitigen Ende des Hohlzylinderprofils, und besonders bevorzugt ist sie als durchgehende Öffnung ausgebildet, so dass das Hohlzylinderprofil der Fügeklammer in Längsrichtung durchgehend offen ist. Die separate Fügeklammer kann auch als Hohlprofil geformt sein, in das wenigstens ein aufschäumbares Ergänzungsprofil eingelegt ist, das vor dem Fügeverbinden oder im Zuge des Fügeverbindens geschäumt und anschließend das Hohlprofil der Fügeklammer aussteift.

In der mit der Öffnung versehenen Ausführungsform wird die separate Fügeklammer auf entsprechend an den Formkörpern ausgebildete Anschlussprofile aufgesteckt, aufgelegt, aufgeschoben oder sonstwie geeignet in ihrer Lage in Bezug auf die passend zueinander gelegten Formkörper fixiert. In der für das Aufschäumen vorbereiteten Ausgangslage ragen somit jeweils Anschlussprofile der zu verbindenden Formkörper in den von der Fügeklammer begrenzten Hohlraum. Vorzugsweise ragt auch bei einer integriert ausgebildeten Fügeklammer ein Anschlussprofil in den von ihr umschalten Raum. Ein Anschlussprofil eines Formkörpers kann an einem Rand des Formkörpers oder auch an jeder anderen zum Verbinden dienenden Anschlussstelle des Formkörpers gebildet sein.

Die Formkörper können auch mittels der Fügeklammer, insbesondere der separaten Fügeklammer, in der im Verbund gewünschten Lage zusammengehalten werden.

In einer ebenfalls bevorzugten Ausführung werden zusätzlich zur Fügeklammer, die separat oder integriert ausgebildet sein kann, Klammern oder andere geeignete Fixiermittel zum Fixieren der Formkörper zueinander verwendet.

Das erfindungsgemäss verwendete Verbindungsmaterial, nämlich aufschäumbares Metallschaummaterial, kann durch die zu verbindenden Formkörper selbst, eine separate Fügeklammer oder durch ein oder mehrere Ergänzungsprofile in den Fügebereich eingebracht werden. Besonders bevorzugt werden Kombinationen dieser Schaummaterialein- träge eingesetzt, insbesondere eine Kombination aus allen drei Möglichkeiten.

Falls mehr als zwei Formkörper in einem gemeinsamen Fügebereich aneinanderstoßen, lässt sich solch ein Formkörperverbund durch Verwendung einer separaten Fügeklammer besonders einfach herstellen. Die hierfür vorgesehene Fügeklammer kann beispielsweise durch ein sternförmiges Fügeklammerhohlprofil gebildet werden.

Da das Schaummaterial im Fügebereich bei und nach dem Aufschäumen eine porige Struktur aufweist und deshalb bekannterweise eine gegenüber dem vollen Material verringerte Wärmeleitfähigkeit besitzt, wird der Fügebereich, d.h. der durch Verklammerung umschalte Raum, von innen temperiert. Neben der Kühlung zum Beenden des Aufschäumvorgangs oder zum raschen Abkühlen nach dem Aufschäumen kann es auch von Vorteil sein, das Schaummaterial zum Zwecke des Aufschäumens von innen zu erwärmen. Ein Temperiermittel zum Kühlen oder auch zum Heizen oder auch zum Kühlen und Heizen kann grundsätzlich durch jede geeignete Art von Kühl- oder Heizmittel gebildet werden, beispielsweise durch Eintrag elektrischer Energie. Vorzugsweise wird das Temperiermittel aber durch wenigstens einen Strömungskanal gebildet, durch den ein Kühl- oder Heizfluid geführt wird. Der Strömungskanal kann perforiert sein, um das Temperiermittel unmittelbar mit dem Schaummaterial in Berührung zu bringen.

In einer weiteren bevorzugten Ausführung wird das Metallschaummaterial von innen mit einem Fluid, vorzugsweise ein Inertgas oder Reaktionsgas beaufschlagt, durch das die oxidative Wirkung eines im aufschäumbaren Metallschaummaterial enthaltenen Treibmittels verringert oder verstärkt wird. Ein hierfür im Fügebereich angeordneter perforierter Strömungskanal kann vorzugsweise durch den vorgenannten Temperierkanal gebildet werden; es kann jedoch ein separater weiterer Kanal, welcher über kleine Öffnungen verfügt, d.h. ein perforierter Kanal, eingebracht werden.

Das Temperierfluid und das Fluid zum Steuern einer Oxidation können durch das gleiche Fluid gebildet werden.

Bevorzugte Ausführungsbeispiele werden nachfolgend anhand von Figuren erläutert. Es zeigen:
- Fig. 1a: zwei Formkörper und eine Fügeklammer positioniert für eine Fügeverbindung,
- Fig. 1b: die Fügeverbindung der Fig. 1a nach dem Aufschäumen,
- Fig. 2a: zwei Formkörper und eine Fügeklammer mit Stützprofil positioniert für eine Fügeverbindung,
- Fig. 2b: die Fügeverbindung der Fig. 2a nach dem Aufschäumen,
- Fig. 3a: zwei Formkörper und eine rechteckförmige Fügeklammer positioniert für eine Fügeverbindung,
- Fig. 3b: die Fügeverbindung der Fig. 3a nach dem Aufschäumen,
- Fig. 4a: zwei Formkörper und eine rechteckförmige Fügeklammer mit innenliegenden Schenkeln positioniert für eine Fügeverbindung,
- Fig. 4b: die Fügeverbindung der Fig. 4a nach dem Aufschäumen,
- Fig. 5a: zwei bereits aufgeschäumte Formkörper und eine trapezförmige, ebenfalls bereits aufgeschäumte Fügeklammer positioniert für eine Fügeverbindung,
- Fig. 5b: die Fügeverbindung der Fig. 5a nach dem Aufschäumen,
- Fig. 6a: zwei Formkörper mit integrierter Fügeklammer positioniert für eine Fügeverbindung,
- Fig. 6b: die Fügeverbindung der Fig. 6a nach dem Aufschäumen,
- Fig. 6c: die Fügeverbindung nach Fig. 6a, jedoch mit geschlitzten Deckblechen der Formkörper,
- Fig. 6d: die Fügeverbindung der Fig. 6c nach dem Aufschäumen,
- Fig. 7a: zwei Formkörper und eine Fügeklammer mit Montage- bzw. Aufnahmehülse positioniert für eine Fügeverbindung,
- Fig. 7b: die Fügeverbindung der Fig. 7a nach dem Aufschäumen,
- Fig. 8: einen Kreuzverbund,
- Fig.9a-d: Abstandshalter,
- Fig. 10: ein Hohlprofil mit Temperierkanal und Ergänzungsprofilen und
- Fig. 11: ein Hohlprofil mit Temperierkanälen, Abstandshaltern nach Fig. 9d und Ergänzungsprofilen.

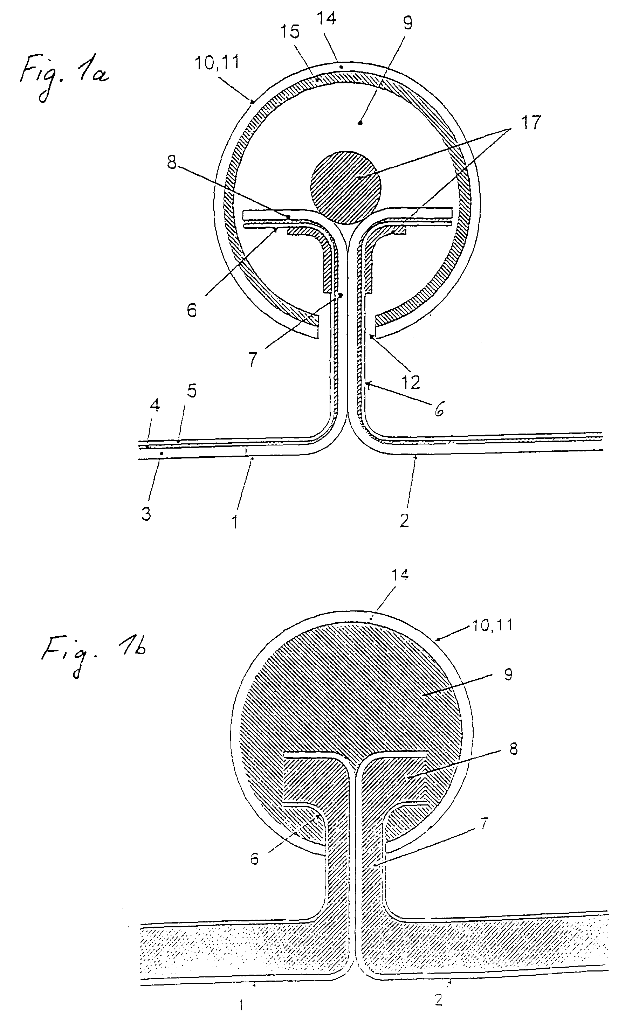

Fig. 1a zeigt einen Fügebereich eines ersten Formkörpers 1 und eines zweiten Formkörpers 2 in einem Querschnitt. Bei den Formkörpern 1 und 2 handelt es sich um entsprechend dem späteren Verwendungszweck vorgeformte Segmente, beispielsweise Karosseriebleche eines Kraftfahrzeugs oder Rumpfsegmente eines Schiffs oder Luftfahrzeugs. Zur Herstellung der Formkörper 1 und 2 wird ein plattenförmiges Halbzeug verwendet bestehend aus einer aufschäumbaren Schicht 4 eines Metallschaummaterials, das sandwichartig zwischen einer unteren und einer oberen vollmetallischen Deckschicht 3 und 5 angeordnet ist Der Schichtverbund im Halbzeug für die Formkörper 1 und 2 kann beispielsweise mittels Klebung oder Diffusionshaftung hergestellt sein. Aus solch einem Halbzeug werden nach Durchführung eines Trennverfahrens die Formkörper 1 und 2 durch Kaltverformung erhalten.

An jedem der Formkörper 1 und 2 ist längs einer seiner Seitenkanten je ein Anschlussprofil 6 durch zweifaches Umkanten ausgebildet. Solch ein Anschlussprofil 6 in Form einer Bördelkante weist einen vom jeweiligen Formkörper 1 bzw. 2 abragenden ersten Steg 7 und einen daran anschließenden, wieder zum gleichen Formkörper hin umgekanteten zweiten Steg 8 auf. Der zweite Steg 8 verläuft im Ausführungsbeispiel beabstandet parallel zu dem darunter liegenden Endbereich des jeweiligen Formkörpers 1 bzw. 2. Zum Herstellen eines Formkörperverbunds sind die Formkörper 1 und 2 mit ihren Anschlussprofilen 6 aneinander stoßend in Position gelegt und in dieser Position fixiert worden. Anschließend wurde eine Fügeklammer 10 angelegt, so dass die aneinander stoßenden Anschlussprofile 6 von der Fügeklammer 10 umgriffen werden.

Die Fügeklammer 10 wird durch ein im Querschnitt kreisförmiges Hohlzylinderprofil 11 gebildet, das in seiner Längsrichtung von der geraden, von einer Stirnseite zur anderen Stirnseite durchgehenden Öffnung 12 durchbrochen wird. Die Fügeklammer 10 ist ebenfalls aus einem plattenförmigen Metallschaumhalbzeug hergestellt. Hierfür wird das Halbzeug rechteckförmig zugeschnitten und in die hohlzylindrische Profilform kaltverformt, beispielsweise gebogen oder gewalzt. Ebenso wäre die Herstellung aus einem hohlzylindrischen Halbzeug durch Heraustrennen der Längsöffnung 12 möglich. Bei dem Halbzeug der Fügeklammer 10 handelt es sich ebenfalls um Schichtmaterial, im Ausführungsbeispiel der Fig. 1a um ein zweischichtiges Material, mit einer aufschäumbaren Schicht 15 eines Metallschaummaterials und einer vollmetallischen Deckschicht 14 aus dem gleichen Metall. Ein Verbund zwischen den beiden Schichten 14 und 15 kann beispielsweise durch Klebung oder Diffusionshaftung hergestellt sein. Im Hohlzylinderprofil 11 bildet die aufschäumbare Schicht 15 die von der äußeren Deckschicht 14 umhüllte Innenschicht.

Nach dem Anlegen umgreift die Fügeklammer 10 die beiden aneinander stoßenden Anschlussprofile 6. Ihre beiden die Öffnung 12 begrenzenden Längskanten kommen beidseits der Anschlussprofile 6 im Bereich der ersten Stege 7 zu liegen. Zwischen den ersten Stegen 7 und den Längskanten der Fügeklammer 10 verbleibt ein Spalt. Die voneinander wegweisenden zweiten Stege 8 kommen im Bereich der größten Querschnittserstreckung des Hohlzylinderprofils 11 zu liegen. Die Fügeklammer 10 wird längs auf die Anschlussprofile 6 aufgeschoben, da sie selbst nicht verformbar ist.

Die Fügeklammer 10 wird in der gezeigten Lage gehalten, in der sie den Fügebereich mit den beiden Anschlussprofilen 6 wie eine Schale umgibt. Sie wird im Ausführungsbeispiel durch Haltemittel in der gezeigten Stellung zu den Formkörpern 1 und 2 gehalten. Die Fügeklammer 10 kann grundsätzlich jedoch auch mit einer geringen Elastizität ausgestattet sein, so dass sie bereits in der gezeigten Ausgangsstellung der Formkörper 1 und 2 diese beiden Formkörper in dieser Ausgangsstellung zusammenklemmt und fixiert, insbesondere indem sie die Stege 7 im Bereich der Öffnung 12 der Fügeklammer 10 gegeneinander presst. Es wäre bei entsprechend abgestimmter Formgebung der Formkörper 1 und 2 und der Fügeklammer 10 auch möglich, die Fügeklammer 10 vor dem Aufschäumen auf den Formkörpern 1 und 2 oder deren Anschlussprofilen 6 aufsitzend in der für den Verbund gewünschten Lage formschlüssig zu halten. Sie weist in jedem Falle eine ausreichend große Eigensteifigkeit aus, so dass sie bei einem späteren Aufschäumen von Metallschaummaterial die Schalungsfunktion und damit einhergehende Verklammerungsfunktion ausüben kann.

Nach oder auch vor dem Anlegen der Fügeklammer 10 werden in einen Raum 9, der durch das Hohlzylinderprofil 11, insbesondere die Deckschicht 14, umschalt wird, Ergänzungsprofile 17 aus einem aufschäumbaren Metallschaummaterial eingelegt. Die Ergänzungsprofile 17 dienen der Einstellung der Schaummaterialmenge und der später daraus folgenden Dichte des aufgeschäumten Schaummaterials innerhalb des von dem Hohlzylinderprofil 11 begrenzten Raums 9. Die Form solcher Ergänzungsprofile und die Menge des dadurch eingebrachten, aufschäumbaren Metallschaummaterials wird der Geometrie des Hohlzylinderprofils 11 und der in das Hohlzylinderprofil 11 hineinragenden Anschlussprofile 6 angepasst gewählt. Hierdurch ist eine besonders genaue Anpassung des im Raum 9 befindlichen Metallschaummaterials nach Form und Menge möglich. Eine weitere Anpassungsmöglichkeit bietet das gezielte Herausarbeiten von Metallschaummaterial, beispielsweise aus der aufschäumbaren Schicht 15 der Fügeklammer 10.

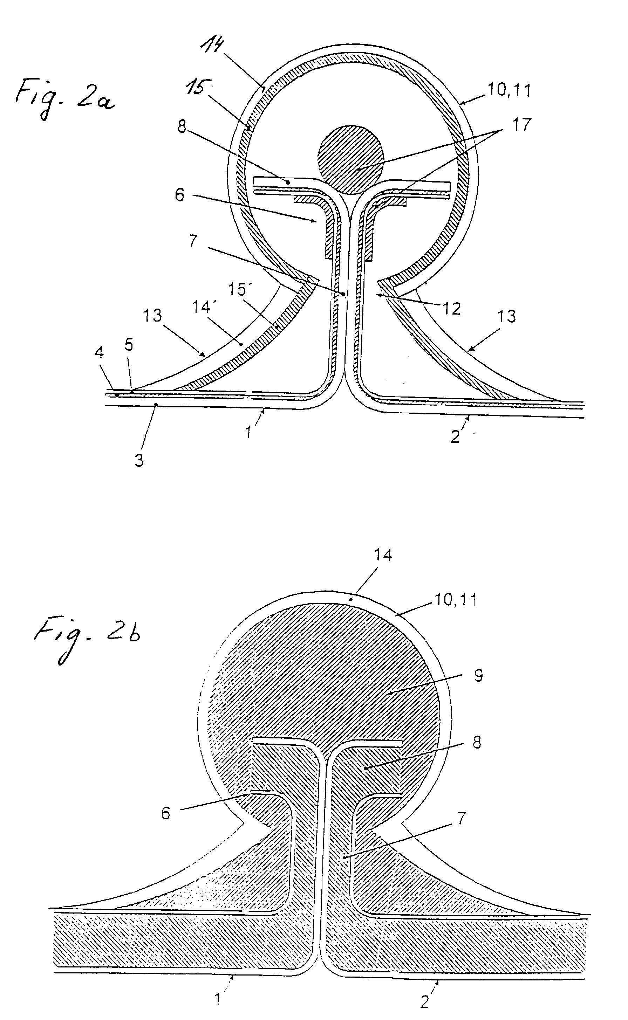

In Fig. 2a ist eine zweite Ausführungsform einer Fügeklammer 10 dargestellt. Bei dieser Fügeklammer 10 setzt längs zu beiden Seiten der Öffnung 12 des Fügeklammerhohlprofils 11 je ein Stützprofil 13 an. Solch ein Stützprofil 13 kann beispielsweise durch Umbiegen bereits im Zuge der Formung des Hohlzylinderprofils 11 angeformt werden. Mit seiner freien Längskante sitzt solch ein Stützprofil 13 im angelegten Zustand der Fügeklammer 10 auf einem der Formkörper 1 und 2 auf. Bei horizontaler Ausrichtung bedarf es keiner zusätzlichen Halterung für diese Fügeklammer 10. Jedes der Stützprofile 13 bildet eine Querverstrebung zwischen dem jeweiligen Formkörper 1 und 2 und dem vom Formkörper aufragenden Anschlussprofil 6. Die Stützprofile 13 versteifen den Formkörperverbund zusätzlich. Hierdurch kann einer gegebenenfalls vorhandenen Verformungsneigung, beispielsweise einer Verwindungsneigung des einzelnen Formkörpers 1 und 2, entgegengewirkt werden. Die Stützwirkung bleibt auch nach dem Herstellen des Verbunds erhalten. Die Stützprofile 13 werden durch das gleiche plattenförmige Halbzeug wie das Hohlzylinderprofil 11 gebildet, könnten grundsätzlich jedoch auch aus einem anderen Halbzeug aus verträglichem Material hergestellt sein. Auch bei den Stützprofilen 13 wird eine innere, aufschäumbare Schicht 15' eines Metallschaummaterials von einer äußeren Deckschicht 14' eines vollmetallischen Materials bedeckt. Jedes Stützprofil 13 begrenzt durch seine strebenförmige Anordnung den Innenkantenraum im Fußbereich des jeweiligen Anschlussprofils 6. Da in diesem Innenkantenraum das aufschäumbare Material der Schicht 15' vorhanden ist, wird auch dieser Raum bei dem späteren Aufschäumen ausgeschäumt und dadurch der Verbund weiter versteift. Von den Stützprofilen 13 und den damit einhergehenden Vorteilen abgesehen entspricht die Anordnung der Fig. 1 b vollkommen derjenigen der Fig. 1a , so dass auf die vorstehenden Erläuterungen dazu auch im Zusammenhang mit der Anordnung nach Fig. 1 b verwiesen sei.

Fig. 1b und Fig. 2b zeigen den jeweiligen nach dem Aufschäumen des Metallschaummaterials entstandenen Pressverbund der beiden Formkörper nach den Fig. 1a und 2a und der Fügeklammer 10 für die vorher beschriebenen Fügeklammerverbindungen. Dabei ist deutlich zu erkennen, dass die Fügeklammer 10, nämlich deren Deckschicht 14, zusammen mit den Anschlussbereichen der Formkörper 1 und 2, im wesentlichen jedoch die Fügeklammer 10 allein, eine Einschalung für das aufschäumende und schließlich das aufgeschäumte Metallschaummaterial im Raum 9 sowie im Innenkantenbereich des Anschlussprofils 6 des zweiten Formkörpers 2 bilden. Dabei füllt das aufgeschäumte und wieder erkaltete Metallschaummaterial beide Räume gleichmäßig aus.

Grundsätzlich würde es genügen, die Anschlussprofile 6 als einfach aufragende Stege 7 auszubilden. Auch dann würden die beiden Formkörper 1 und 2 mit den aneinander stoßenden Stirnflächen ihrer jeweiligen Anschlussprofile 6 fest gegeneinander gepresst und bereits dadurch verbunden werden. Des weiteren ist nach dem Aufschäumen im Inneren in der Umschalung eine zusammenhängende, homogene Metallschaumstruktur entstanden, die vom Metallschaummaterial des ersten Formkörpers 1 über das Metallschaummaterial im Hohlzylinderprofil 11 der Fügeklammer 10, das eine Brücke bildet, zum Metallschaummaterial des zweiten Formkörpers 2 reicht. Zur Erhöhung der Festigkeit dieses Verbunds, der so bereits einen kombinierten Kraft- und Stoffverbund bildet, trägt noch die Formgebung der Anschlussprofile 6 bei, die aufgrund ihrer Form als Verankerung wirken. In der Matrix des aufgeschäumten Metallschaummaterials innerhalb des Fügeklammerhohlprofils 11 sind die Formkörper 1 und 2 aufgrund der Ausbildung der zweiten Stege 8 pilzförmig bzw. widerhakenförmig verankert.

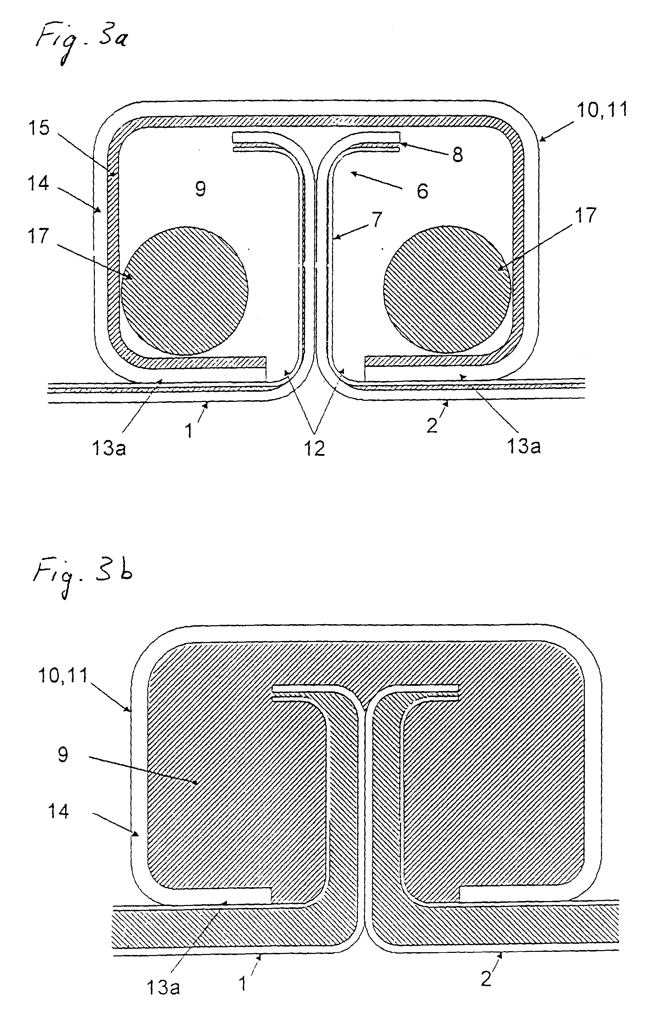

Die Fig. 3a und 4a zeigen den Fügebereich zweier Formkörper 1 und 2, die jeweils unterschiedlich starke vollmetallische Deckschichten und eine dazwischen liegende Schicht eines aufschäumbaren Metallschaummaterials aufweisen, wie die Formkörper des Ausführungsbeispiels der Fig. 1a und 2a. Die Fügeklammer 10 des Ausführungsbeispiele der Fig. 3a und 4a wird durch ein Hohlzylinderprofil 11 in einer einfachen Rechteckquerschnittsform mit der durchgehenden Längsöffnung 12 gebildet. Während die Fügeklammer 10 des Ausführungsbeispiels nach Fig. 3a in zwei aufeinander zu weisenden, die Längsöffnung 12 zwischen sich bildenden Längsschenkeln 13a ausläuft, sind bei der Fügeklammer 10 der Fig. 4a die beiden Schenkel 13a in den Innenraum 9 des Hohlzylinderprofils 11 hinein gebogen und erstrecken sich derart ein Stück weit parallel beabstandet zu dem Steg 7 des zugewandten Anschlussprofils 6. In beiden Ausführungsbeispielen liegt die Fügeklammer 10 mit den beiden die Längsöffnung 12 zwischen sich bildenden Rechteckschenkeln 13a auf den Formkörpern 1 und 2 auf. Die Fügeklammer 10 wird beim Aufschäumen mit ihren Schenkeln 13a fest gegen die gegenüberliegenden Oberflächen der Formkörper 1 und 2 gepresst. Durch dieses Anpressen im Zusammenwirken mit der Gegenkraft aufgrund der Pilzform der Anschlussprofile 6 wird der Formkörperverbund zusätzlich versteift. Bei Fig. 4a ist durch die zusätzlich nach innen gebogenen Schenkel 13b eine noch steifere Verbindung der Formkörper durch die Fügeklammer als bei dem Ausführungsbeispiel 3a vorhanden. Falls erforderlich, werden die Formkörper 1 und 2 für den Fügevorgang zusätzlich von außen fixiert.

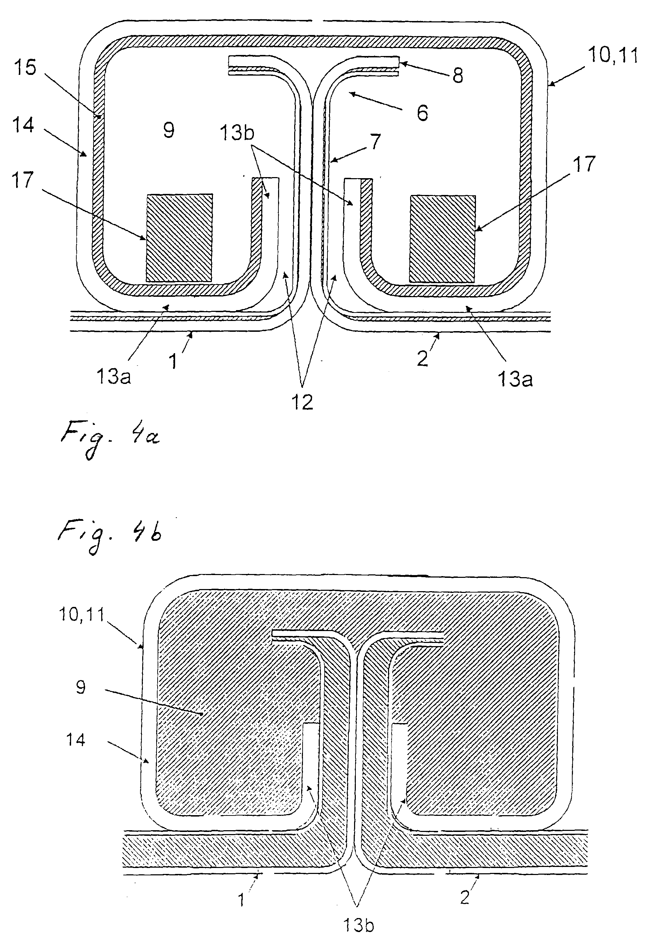

Fig. 3b und 4b zeigen die oben beschriebenen rechteckförmigen Fügeklammern 10 nach dem Aufschäumen. Dabei ist der von der Fügeklammer 10 und den beiden Formkörpern 1 und 2 umschlossene Raum 9, gleichmäßig und vollständig mit dem aufgeschäumten Metallschaum ausgefüllt. So ergibt sich ähnlich wie bei den vorher beschriebenen Ausführungsbeispielen eine feste Verbindung der beiden Formkörper 1 und 2 durch Kraft- und Formschluss.

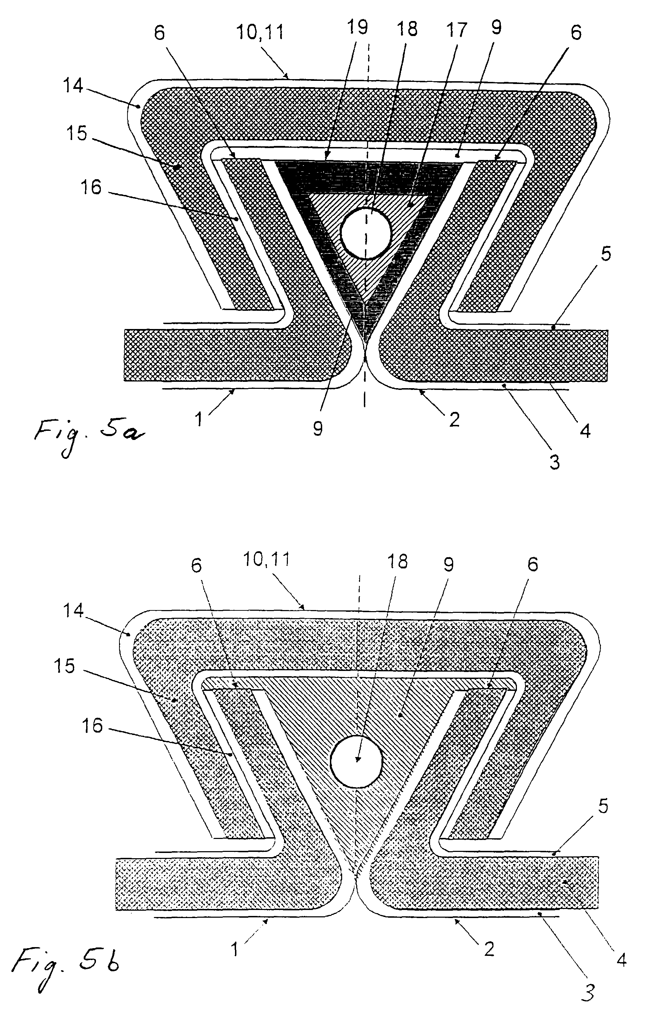

Die Fig. 5a und 5b zeigen ein Ausführungsbeispiel eines Formkörperverbunds vor und nach einem Aufschäumen, bei dem sowohl die Formkörper 1 und 2 als auch die Fügeklammer 10 durch bereits aufgeschäumte Metallschaumformkörper gebildet werden. Dabei handelt es sich wieder um Profile, die aus plattenförmigen Halbzeugen hergestellt sind. Ausgangsmaterial der Profile 1, 2 und 10 ist ein dreischichtiges Halbzeug, bei dem die mittlere, aufgeschäumte Metallschaumschicht 4 beidseitig durch je eine vollmetallische Deckschicht 3 und 5 bedeckt ist. Die Formkörper 1 und 2 und die Fügeklammer 10 erfahren beim Aufschäumen zum Zwecke des Verbindens der Formkörper 1 und 2 keine weitere Volumen- oder Formänderung. Die Fügeklammer 10 kann auch zunächst als Hohlprofil geformt und ganz oder teilweise mittels eingelegten Ergänzungsprofilen ausgeschäumt werden, anstatt sie aus einem Plattenmaterial mit aufgeschäumter Schicht zu formen.

Vor dem Aufschäumen sind die Formkörper 1 und 2 durch die Fügeklammer 10 rein formschlüssig in der für den Verbund gewünschten Lage gehalten. Die Anschlussprofile 6 dieses Ausführungsbeispiels werden durch einmaliges Umkanten bzw. Umbiegen parallel je einer Längskante jedes der Formkörper 1 und 2 gebildet. Die Längskanten der Formkörper sind um mehr als 90 Grad umgebogen und dadurch zum jeweiligen Formkörper hin wieder zurückgebogen, wodurch ein V-förmiger Innenkantenbereich entsteht. In Anpassung an dieses Anschlussprofilpaar weist die Fügeklammer 10 ein Hohlzylinderprofil 11 auf, wie es aus einem rechteckigen Plattenmaterial erhalten werden kann, wenn zwei einander gegenüberliegende Längskanten aufeinander zu umgekantet werden. Im Querschnitt entsteht so eine hohlzylindrische Dreieckform, wobei das Dreieck an einer Spitze zur Ausbildung einer Längsöffnung abgeschnitten bzw. offen ist. Nach einem Aufschieben der Fügeklammer 10 über die Anschlussprofile 6 der Formkörper 1 und 2 weist diese Anordnung im Fügebereich die Form einer Schwalbenschwanzverbindung auf.

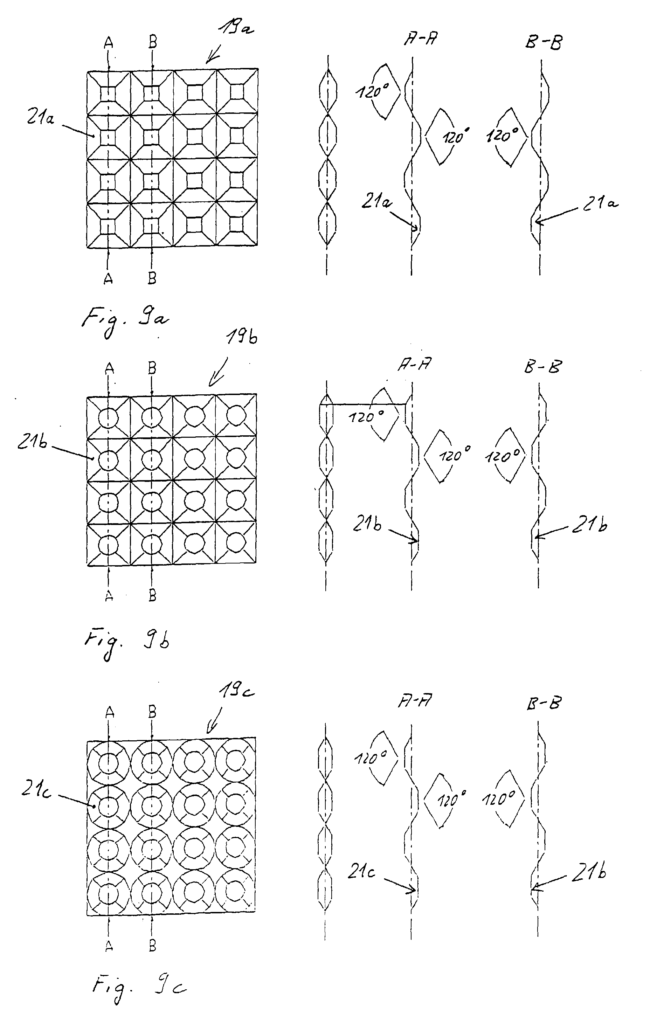

Um die Formkörper 1 und 2 beim Aufschäumen noch besser in der gewünschten Lage zu fixieren, wird in dem von der Fügeklammer 10 begrenzten Raum 9 wenigstens ein Abstandshalter 19 angeordnet. Im Ausführungsbeispiel werden mehrere, der Form der Anschlussprofile 6 bzw. der Fügeklammer 10 entsprechend plattenförmige, dreieckige Abstandshalter 19 verwendet, die in Längsrichtung des Verbunds voneinander beabstandet wie Keile zwischen den einander zugewandten Flächen der Anschlussprofile 6 sitzen. Es entsteht so ein durch die beiden einander gegenüberliegenden, aufeinander zu weisenden Schenkel der Fügeklammer 10 zusammengehaltener, quer zur Längsrichtung vollkommen definierter Formschluss. Das Material der Abstandshalter 19 wird so gewählt, dass deren Schmelztemperatur ausreichend oberhalb der Aufschäumtemperatur des zum Herstellen des Verbunds aufzuschäumenden Metallschaummaterials liegt. Die Abstandshalter 19 können beispielsweise aus dem gleichen Material wie die vollmetallischen Deckschichten der Formkörper 1 und 2 oder der Fügeklammer 10 bestehen. Als aufschäumbares Metallschaummaterial ist in dem durch die derart gebildete Einschalung begrentzten Raum 9 lediglich das Material von Ergänzungsprofilen 17 vorhanden. Die Abstandshalter können aus Draht oder Blech gebildet sein. Im Ausführungsbeispiel sind es Bleche, beispielsweise strukturierte Bleche nach den Fig. 9a bis c.

Der umschalte Raum 9 wird von innen mittels eines im Raum 9 angeordneten Temperiermittels 18 temperiert. Das Temperiermittel 18 wird durch einen durchgehenden Strömungskanal gebildet, durch den zum einen zum Zwecke des Heizens zum Aufschäumen ein Heizfluid oder zum anderen ein Kühlfluid zum Zwecke des Abkühlens am Ende des Aufschäumens und auch noch danach durchgeleitet wird. Falls sowohl geheizt als auch später gekühlt werden soll, kann es zweckmäßig sein, für jeden dieser Zwecke einen separaten Strömungskanal in der Art des Kanals 18 vorzusehen.

Desweiteren kann der Kanal 18 oder auch ein separater eigener Kanal zum Einleiten eines Inertgases oder eines Reaktionsgases verwendet werden, mit dem das Metallschaummaterial beim Aufschäumen beaufschlagt wird, um oxidative Wirkungen eines darin enthaltenen Treibgases zu verringern oder zu verstärken. Solch ein Antioxidants- oder Oxidantsmittel kann gleichzeitig auch ein Heiz- und/oder Kühlfluid bilden. Damit das Inert-oder Reaktionsgas mit dem Metallschaum in Berührung kommt und reagiert, ist ein für diesen Zweck vorgesehener Kanal mit kleinen Öffnungen, einer sogenannten Perforation versehen.

Durch ein gezieltes Aufheizen und Abkühlen der eingelegten, aufschäumbaren Ergänzungsprofile 17 über ein durch den Strömungs- bzw. Temperierkanal 18 strömendes Temperierfluid kann besonders sicher gewährleistet werden, dass die schon vor dem Fügen aufgeschäumten Profile 1,2 und 10 von dem Fügeschäumen nicht beeinflusst werden, z.B. durch unerwünschtes Initiieren eines erneuten Schäumens der Profile 1, 2 und 10. Der Kanal 18 kann aus einem Rohr mit beliebiger Querschnittsform gebildet sein, wobei das Rohr aus einem Material besteht, welches eine ausreichend höhere Schmelztemperatur besitzt als die zum Aufschäumen benötigte Temperatur des Temperierfluids.

Die Ergänzungsprofile 17 sind mit einem Bohrung versehen, welche in Form und Größe dem des Rohrquerschnittes gleicht. Die Ergänzungsprofile 17 können so auf den Kanal 18 abwechselnd mit den Abstandshaltern 19 aufgefädelt und in den Hohlraum 9 eingeführt werden. Die Abstandshalter 19 sind so geformt, dass sie den Kanal 18 mit den aufgefädelten Ergänzungsprofilen 17 mittig in dem Hohlraum 9 halten. Die Abstandshalter 19 bilden gleichzeitig radial abragende Kühlrippen und/oder Heizrippen des Temperierkanals 18. Sie dienen insbesondere zum Aufheizen der Ergänzungsprofile 17. Nach dem Aufschäumen wird ihre gegenüber dem Metallschaum deutlich höhere Wärmeleitfähigkeit dazu genutzt, die Schaumphase im Raum 9 schnell und gezielt abzukühlen.

Im Raum 9 können mehrere Temperierkanäle 18, je wenigstens ein Kanal für jeden der genannten Zwecke oder auch mehrere für jeden der genannten Zwecke angeordnet sein.

Das aufschäumbare Metallschaummaterial ist den Kanal 18 unmittelbar umgebend angeordnet. Hierdurch ist es möglich, Temperiermittel und Metallschaummaterial in einem Arbeitsgang im Fügebereich zu integrieren. Dabei ist es auch möglich, im Handel erhältliche Strangprofile aus ungeschäumtem Metallschaummaterial zu durchbohren und auf dem Temperierkanal 18 aufzufädeln. Die Ergänzungsprofile 17 sollten dabei fest auf dem Temperierkanal sitzen um einen guten Wärmeübergang zu gewährleisten. Falls entlang des Temperierkanals 18 Abstandshalter 19 angeordnet sind, können die einzelnen Ergänzungsprofile 17 jeweils zwischen solchen Abstandshaltern 19 aufgefädelt sein. Ein Temperierkanal 18 kann durch ein einstückiges Rohr gebildet werden, auf das die Abstandshalter 19 aufgeschoben und damit vorzugsweise gut wärmeleitend verbunden werden. Dabei werden Ergänzungsprofile 17 je zwischen den Abstandshaltern 19 aufgefädelt. Solch ein Temperierkanal 18 kann auch abschnittsweise zusammengestückelt sein, beispielsweise durch Einpressen von aneinander stoßenden Kanalstücken in je eine Verbindungsmuffe.

Ein Temperierkanal oder mehrere Temperierkanäle und Abstandshalter, wie vorstehend beschrieben, können auch in den Hohlräumen der Fügeklammer 10 der Ausführungsbeispiele nach den Figuren 1a bis 4b vorgesehen sein.

Fig. 5b zeigt den Formkörperverbund nach dem Aufschäumen. Das aufgeschäumte Metallschaummaterial des Ergänzungsprofils 17 oder der mehreren Ergänzungsprofile 17, falls mehrerer solcher Profile 17 entlang des Temperierkanals 18 aufgefädelt sind, füllt dann den Raum 9 aus und stellt so den unlösbaren, hochfesten Pressverbund zwischen den Formkörpern 1 und 2 sowie der Fügeklammer 10 her. Die durch das Aufschäumen entstehenden Kräfte werden, an der Kontaktfläche zwischen den Formkörpern 1 und 2 und der Fügeklammer 10 wie an einem Keil in eine tangential und eine normal zu den Anschlussprofilen 6 gerichtete Kraft aufgeteilt und pressen dadurch die Anschlussprofile 6 gegen die Innenwände der Fügeklammer 10.

Aufgrund der Integration eines Temperiermittels, im Ausführungsbeispiel der Kanal 18, ist auch der Austausch eines beschädigten Formkörpers oder eines beschädigten Formkörperbereichs auf sehr einfache Weise möglich, da mit Hilfe des Kanals 18 eine nur lokale Erwärmung im Fügebereich des Austauschformkörpers bewerkstelligt werden kann. Wird beispielsweise der beschädigte Bereich eines Formkörpers durch einen Austauschformkörper ersetzt, so wird der beschädigte Formkörperbereich aus dem Verbund herausgetrennt. Der Kanal 18 wird an den hierdurch gebildeten Trennstellen des Formkörpers ebenfalls durchtrennt. Die Kanalstücke im verbliebenen Formkörperverbund werden mit einer Kühlvorrichtung verbunden. Das Kanalstück im Bereich des herausgetrennten Formkörpersbereichs wird mit einer Heizvorrichtung verbunden und als Temperierkanal beim Fügeschäumen für den Austauschformkörper genutzt. Alternativ kann auch ein neuer Temperierkanal in dem Fügebereich für den Austauschformkörper angeordnet werden. Zum Fügeschäumen wird von der Heizvorrichtung ein Heizfluid zum Temperierkanal für den Austauschformkörper hingeleitet und nach Durchfluss wieder zur Heizvorrichtung abgeleitet. Der Temperierkanal für den Austauschformkörpers bildet auf diese Weise ein Verbindungsstück im Kreislauf eines Heizfluids. Zum Schutz vor übermäßigem Hitzeeintrag dienen die verbliebenen Temperierkanäle 18 der Formkörperbereiche, die an den Austauschformkörper angrenzen, als Verbindungskanäle in einem Kühlkreislauf. Auf diese Weise wird bei einer Reparatur die Temperatur des Metallschaummaterials im Fügebereich des Austauschformkörpers und daran angrenzend gesteuert.

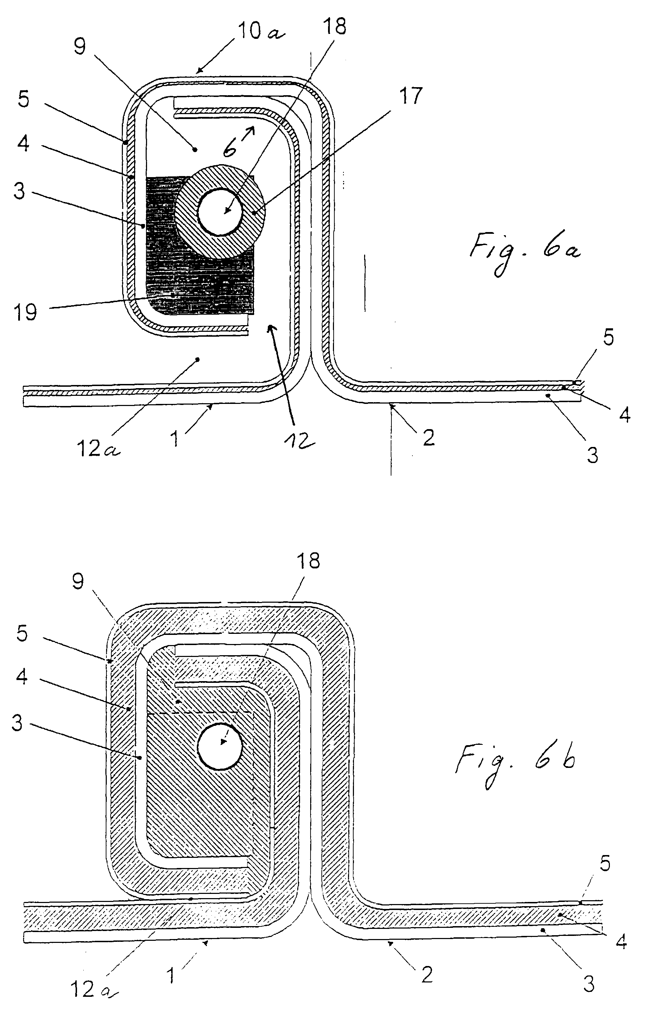

In Fig. 6a und 6b ist ein Formkörperverbund vor und nach dem Aufschäumen dargestellt, bei dem die Formkörper 1 und 2 selbst eine Fügeklammer 10a bilden. Es wird keine separate Fügeklammer benötigt. Die Formkörper 1 und 2 sind aus aufschäumbarem Plattenmaterial 4 mit einer unteren und einer oberen vollmetallischen Deckschicht 3 und 5 gefertigt. Die Deckschicht 5, zu deren Fläche hin sich das Material der Aufschäumschicht 4 während des Aufschäumens idealerweise in Richtung der Flächennormalen ausdehnen soll, ist dünner und somit flexibler als die gegenüberliegende Deckschicht 3. Die dickere Deckschicht 3 ist ausreichend stabil ausgelegt, so dass sie die angebördelte Form der Formkörperränder, d.h. die Form der Anschlussprofile, während des Aufschäumens beibehält. Soweit erforderlich, werden die Formkörper 1 und 2 von außen während des Aufschäumvorgangs zueinander zusätzlich fixiert.

Die Formkörper 1 und 2 sind an der Verbundstelle bzw. im Fügebereich so geformt, dass zwischen ihnen durch das Aufschäumen eine form-, kraft- und stoffschlüssige Verbindung entsteht. Im Ausführungsbeispiel 6a wird dies durch eine hakenförmige Bördelung der Formkörper 1 und 2 gewährleistet. Das Anschlussprofil 6 des Formkörpers 1 ist wieder zu einem Haken, zweifach um jeweils 90°, gebogen. Das Anschlussprofil 6 des zweiten Formkörpers 2 umgreift diesen Haken. Es ist so gebogen bzw. umgekantet, dass eine hohlzylindrische Fügeklammer 10a mit einer Öffnung 12 zum Einführen des Anschlussprofils 6 des Formkörpers 1 gebildet wird. In seinem Fügebereich und unmittelbar daran anschließend weist der zweite Formkörper 2 die Form eines 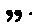 Fragezeichens" auf. Die vorgeformten Formkörper 1 und 2 können so ineinander verhakt werden.

In den von den Formkörpern 1 und 2 eingeschlossenen Raum 9 sind aufschäumbare Ergänzungsprofile 17 engelegt, um ein vollständiges Ausschäumen des Raums 9 zu gewährleisten. Die Ergänzungsprofile 17 sind auf einem Temperierkanal 18 aufgefädelt und werden durch Abstandshalter 19 in Position gehalten.

Fig. 6b zeigt die Fügeverbindung nach dem Aufschäumen. Während des Aufschäumens hat eine Volumenausdehnung der Formkörper 1 und 2 stattgefunden, vorzugsweise senkrecht zu der dünneren Deckschicht 5. Dadurch haben sich die beiden Formkörper 1 und 2 an einem vor dem Aufschäumen offenen Spalt 12a zwischen einander zugewandten Deckschichten 5 aufeinander zu ausgedehnt und diesen Spalt 12a geschlossen. Das aufgeschäumte Ergänzungsprofil 17 hat den geschlossenen Raum 9 vollständig ausgefüllt, und die Formkörper gegeneinander verpresst.

Fig. 6c und 6d zeigen die für die Fig. 6a und 6b beschriebene Fügeverbindung, jedoch mit dem Unterschied, dass je das die dünnere Deckschicht 5 bildende Deckblech der Formkörper 1 und 2 mit Stauchungsfugen 20a und Dehnungsfügen 20b versehen ist, um ein ungehindertes Aufschäumen besser zu gewährleisten. Dies kann erforderlich werden, wenn die dünneren Deckschichten 5 nicht flexibel genug sind, um einen ungehinderten Aufschäumvorgang zu gewährleisten, beispielsweise aufgrund ihrer Dicke. Zur Ausbildung der Stauchungs- und Dehnungsfugen 20a und 20b sind die Deckschichten 5 im Umkant- bzw. Biegebereich jeweils unmittelbar am Ende und Anfang jedes Radius mit durchgehenden Schlitzen versehen. Die Breite der Schlitze ist dem zu erwartenden Aufschäumungsgrad und der Aufschäumungsrichtung angepasst, so dass sich die an die Fugen 20a und 20b grenzenden Blechstreifen während des Aufschäumens nicht behindern können. Aus diesem Grund sind die Stauchungsfugen 20a breiter gewählt als die Dehnungsfugen 20b, da sich hier die Deckbleche 5 vom jeweiligen Formkörper in Richtung seines freien Endes gesehen in Richtung Radiusanfang bewegen und deshalb ein größerer Spielraum vorteilhaft ist.

Mit Ausnahme der Wirkungsweise der Fugen 20a und 20b gelten in Bezug auf Fig. 6d die zu Fig. 6b gemachten Ausführungen. Durch den Aufschäumvorgang hat sich die Breite der Stauchungsfugen 20a verkleinert, da sich die einzelne Blechstreifen in Richtung Radiusanfang bewegt haben. Die Breite der Dehnungsfügen 20b hat sich vergrößert, da sich die Blechstreifen nach außen zu den freien Enden bewegt haben.

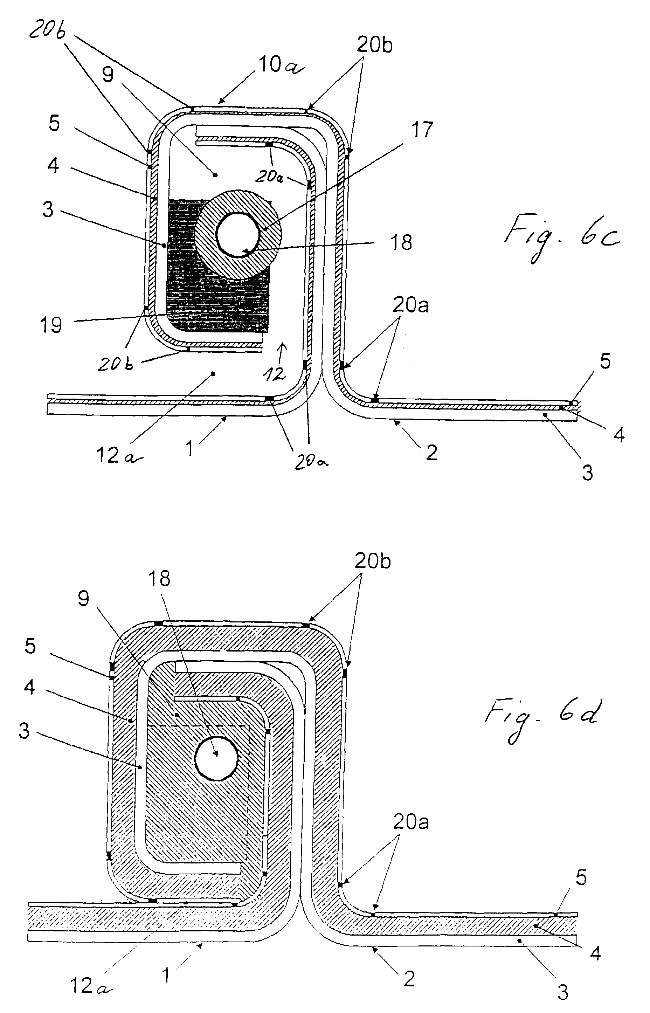

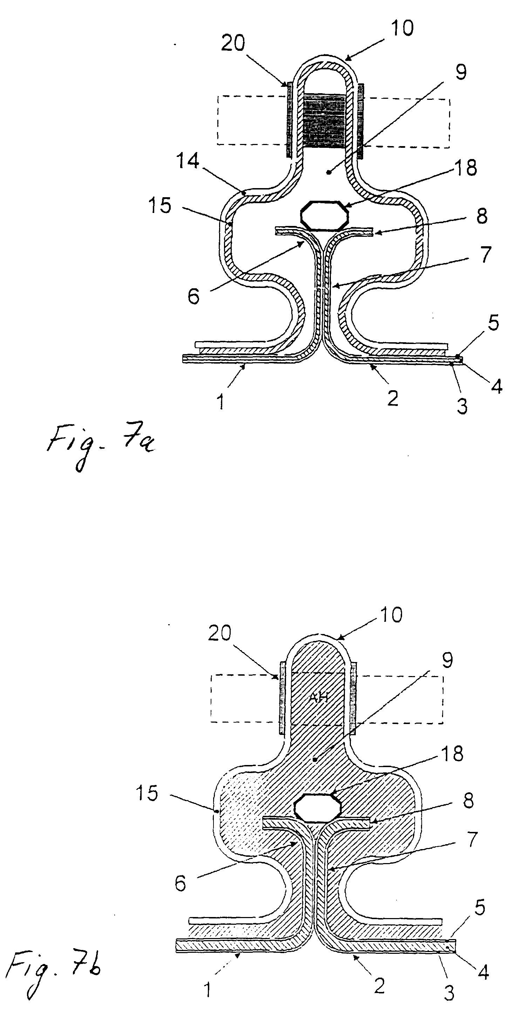

Die Fig. 7a und 7b zeigen eine Fügeverbindung zweier Formkörper 1 und 2 mit einem eingefügten Montage- bzw. Aufnahmemittel 20. Die Formkörper 1 und 2 bestehen wie in den vorher beschriebenen Anwendungsbeispielen je aus einer oberen und einer unteren vollmetallischen Deckschicht 3 und 5 und einer mittleren Aufschäumschicht 4. Ähnlich wie in den Fig. 1a - 4b ist an den Formkörpern 1 und 2 jeweils ein Anschlussprofil 6 geformt, um einen besonders sicheren Pressverbund zu erhalten.

Die Fügeklammer 10 ist aus einer vollmetallischen Deckschicht 14 und einer Aufschäumschicht 15 aufgebaut und so geformt, dass das Montagemittel, im Ausführungsbeispiel eine Hülse 20, quer zur Längsachse der Fügeklammer 10 eingebaut werden kann. Die Hülse 20 kann aus zwei ineinander zu verschraubenden oder klemmenden Hälften aufgebaut sein. Ebenso können für diesen Zweck Niethülsen oder ähnliche Verbindungselemente verwendet werden. Dabei sollte darauf geachtet werden, dass die Hülse 20 aus einem Material gefertigt ist, das keine negativen Auswirkungen auf die Fügeklammer 10 hat, z.B. durch Kontaktkorrosion mit dem Fügeklammermaterial. Zum Einbau der Hülse 20 ist die Fügeklammer 10 mit einer durchgehenden Bohrung versehen, die in Form und Größe dem Außendurchmesser der Hülse 20 entspricht und quer zur Längsachse der Fügeklammer liegt. Diese Bohrung kann durch herkömmliche Verfahren, z.B. durch Bohren oder Stanzen hergestellt werden.

Fig. 7b zeigt die Fügeverbindung nach dem Aufschäumen. Der Hohlraum 9 ist vollständig mit Schaummaterial ausgefüllt, wobei die zusätzlich eingebaute Hülse 20 vollständig umschäumt und so, form- und kraftschlüssig fest in die Fügeklammer eingebunden ist. Auch wäre es möglich, eine Öffnung während des Aufschäumens durch einen Stift freizuhalten, der aus einem Material mit höherer Schmelztemperatur als der zum Aufschäumen benötigten Temperatur besteht und die Eigenschaft aufweist, keine stoffschlüssige Verbindung mit dem Schaummaterial einzugehen. Nach dem vollständigen Abschluss des Aufschäums wird der Stift wieder herausgezogen und so eine Befestigungöffnung erhalten. Das aufgeschäumte Metallschaummaterial würde in diesem Fall den eingelegten Stift umschäumen und nach dem Abkühlen und Herausziehen des Stifts eine Öffnung mit geschlossener Oberfläche zurücklassen.

Der Temperierkanal 18 dient zum schnellen Abkühlen des Metallschaums nach dem Aufschäumen. Dabei wird ein Kühlfluid durch den Temperierkanal 18 geführt. Die Fügeverbindung kann, falls notwendig, zusätzlich von außen mit geeigneten Medien, z.B. durch einen kalten Luftstrom, abgekühlt werden.

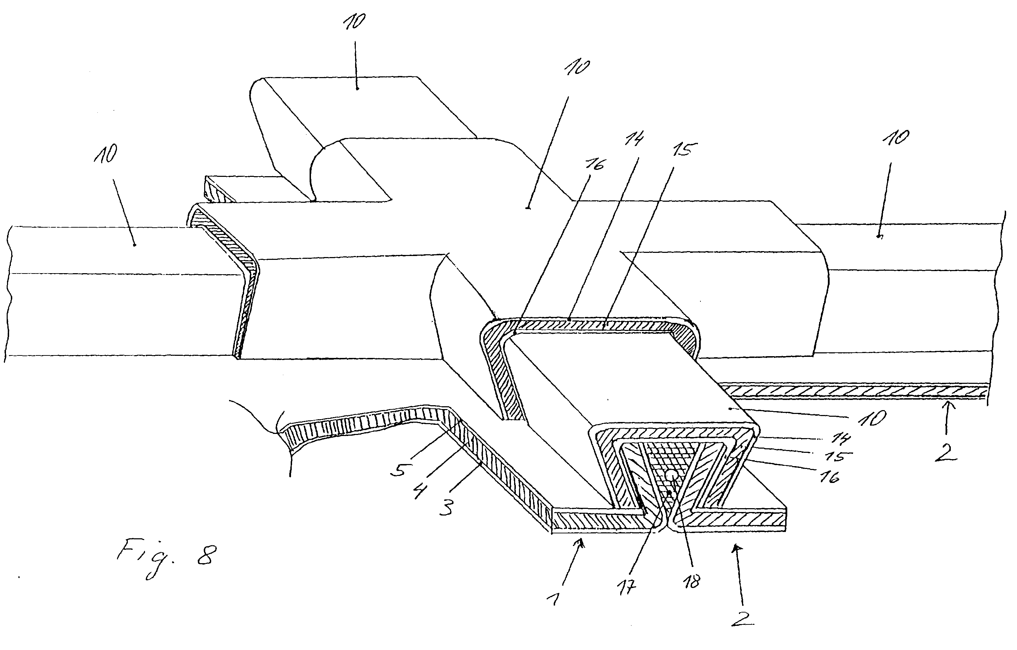

Figur 8 zeigt einen Kreuzverbund von vier Formkörpern 1 und 2. Zwischen aneinander liegenden Paaren der Formkörper 1 und 2 besteht je die Fügeverbindung der Figuren 5a und 5b. Es wird die in den Figuren 5a und 5b beschriebene Fügeklammer 10 zur Herstellung jeder dieser Fügeverbindungen verwendet. In Bezug auf die paarweise Verbindung von Formkörpern 1 und 2 wird daher auf die Beschreibung dieses Ausführungsbeispiels verwiesen.

In Figur 8 sind vier Verbundformkörper je mit Formkörpern 1 und 2 und einer Fügeklammer 10 in einem gemeinsamen Kreuzpunkt in Längsrichtung ihrer Fügebereiche senkrecht aufeinander zu weisend ausgerichtet und in dieser für den dargestellten Kreuzverbund gewünschten relativen Lage zueinander fixiert.

Eine kreuzförmige Fügeklammer 10 erfüllt die Funktion einer Überwurfklammer. Die Überwurfklammer 10 ist einstückig ausgebildet mit vier senkrecht zueinander stehenden Klammerschenkeln, die von einem Klammermittelbereich abstehen. Die Überwurfklammer kann auch aus mehreren Fügeklammern der Figuren 5a und 5b zusammengesetzt sein, die beispielsweise miteinander verschweißt sind. Jeder der Schenkel der Überwurfklammer 10 weist im Querschnitt die Form der Fügeklammer 10 des Ausführungsbeispiels der Figuren 5a und 5b auf. Die Überwurfklammer 10 ist dreischichtig mit vollmetallischen äußeren Deckschichten 14 und 16 und einer inneren Schicht 15 aus einem aufgeschäumten Metallschaummaterial. Die Deckschichten 14 und 16 und die mittlere Schicht 15 der Überwurfklammer 10 bestehen aus den gleichen Materialien wie die Deckschichten 14 und 16 und die Schaummaterialschichten 15 der weiteren Fügeklammern 10 für die paarweisen Verbindungen von Formkörpern 1 und 2.

Die Überwurfklammer 10 könnte auch zweischichtig nur mit einer äußeren, vollmetallischen Deckschicht und einer Aufschäumschicht in der Art der Fügeklammern der Figuren 1a bis 4b ausgebildet sein. Das in diesem Fall aufschäumbare Metallschaummaterial 15 der Überwurfklammer 10 wird durch das gleiche Material wie die Ergänzungsprofile 17 gebildet. Es wäre auch möglich, bei Ausbilden der Schicht 15 als Aufschäumschicht 15 ein Material mit niedrigerer Aufschäumtemperatur zu verwenden, was dann vorteilhaft sein kann, wenn die paarweisen Fügeverbindungen bereits geschäumt sind bevor das Aufschäumen für die Überwurfklammer 10 durchgeführt wird. Für den Fall, dass die Schicht 15 eine Aufschäumschicht ist, ist es wegen der Temperierkanäle 18 vorteilhafterweise aber auch möglich, bei dem Aufschäumen der Überwurfklammer 10 die Fügebereiche der paarweisen Fügeverbindungen mittels der Temperierkanäle 18 bis in den Bereich der Überwurfklammer 10 hinein zu kühlen, um einem erneuten Aufschäumen vorzubeugen. Es wären lediglich die Temperierkanäle 18 an ihren offenen Stirnseiten mit einer Kühleinrichtung zum Durchleiten eines Kühlfluids zu verbinden.

Figur 8 zeigt den Kreuzverbund nach dem Fügeschäumen. Für das Aufschäumen werden zuvor die Formkörper 1 und 2 zusammengelegt, die Fügeklammern 10 in den Fügebereichen darüber gestülpt oder längsseits aufgeschoben und die Temperierkanäle 18 mit den aufgefädelten Ergänzungsprofilen 17 eingeschoben. Die Ergänzungsprofile 17 sind aus dem Metallschaummaterial der Schicht 15 der Überwurfklammer 10 hergestellt. Anschließend werden die derart bereits verklammerten Formkörper 1, 2 in der in Figur 8 gezeigten Lage fixiert und die Überwurfklammer 10 die vier Fügeklammern 10 übergreifend aufgepresst. Alternativ zu der vorbeschriebenen Vorgehensweise können auch zunächst die vier Formkörper 1, 2 in der im Kreuzverbund gewünschten Lage zueinander ausgerichtet und fixiert und unmittelbar auf die Formkörper 1 und 2 die Überwurfklammer 10 aufgesetzt werden. Die Fügeklammern 10 zum Verbinden von jeweils zwei aneinander grenzenden Formkörpern 1 und 2 werden bei dieser Art des Verbindungsaufbaus auf die Anschlussprofile der Formkörper 1 und 2 längs aufgeschoben und in die Überwurfklammer 10 eingeschoben, gegebenenfalls schiebend in die Überwurfklammer 10 hineingepresst. Anschließend wird der formschlüssig zusammengehaltene Kreuzverbund in einen Ofen verbracht und auf die Aufschäumtemperatur des Metallschaummaterials erwärmt. Durch das Aufschäumen wird in einem einzigen Aufschäumschritt der feste Verbund zwischen den einzelnen Formkörperpaaren 1 und 2 und zwischen der Überwurfklammer 10 und den Fügeklammern 10 im Kreuzpunkt hergestellt.

Falls der Verbund der Formkörper 1, 2 die Größe des Ofens bzw. von herkömmlichen Öfen übersteigt, schafft der wenigstens eine Temperierkanal 18 auch die Möglichkeit, das Aufschäumen allein durch eine Innentemperierung, nämlich Innenheizung, jedes der Fügebereiche zu bewerkstelligen. Mindestens ein Temperierkanal 18 durchzieht jeden der Fügebereiche der aneinander grenzenden Formkörper 1 und 2. Falls es sich bei der Überwurfklammer 10 um eine Klammer mit aufschäumbarem Metallschaummaterial handelt, kann ein Temperierkanal oder können mehrere Temperierkanäle auch in einem dann vorhandenen Zwischenbereich zwischen den vier Fügeklammern 10 und der daraufsitzenden Überwurfklammer 10 angeordnet sein.

Die Innentemperierung kann die einzige Möglichkeit der Aufheizung zum Aufschäumen des Metallschaummaterials im Fügebereich bilden.

Die Figuren 9a, 9b, 9c zeigen strukturierte Bleche 19a, 19b und 19c, aus denen die in den vorherigen Ausführungsbeispielen verwendeten Abstandshalter 19 hergestellt sein können, beispielsweise mittels eines Trennverfahrens. Die Bleche 19a, 19b und 19c sind aus einem Material gefertigt, das eine ausreichend höhere Schmelztemperatur als die zum Aufschäumen benötigte Temperatur aufweist. Die als Halbzeuge planen Bleche 19a, 19b und 19c werden zur Oberflächenstrukturierung mittels eines entsprechenden Werkzeugs gleichmäßig mit Ausbuchtungen bzw. Taschen 21a, 21b und 21c versehen. Vorzugsweise erfolgt die Strukturierung mittels Prägen in einem Prägewerkzeug.

Die Taschen 21a, 21b und 21c sind regelmäßige Polyeder, Kegel oder Kegelstümpfe. Die begrenzenden Seitenflächen der Taschen laufen je unter einem Winkel von 120° zum Grund jeder Tasche aufeinander zu. Die Taschen 21a, 21b und 21c sind an ihrem Grund flach abgestumpft. Sie können am Grund geschlossen sein oder offen. Durch den im letzteren Fall offenen Grund solch einer Tasche kann ein Temperierkanal hindurchgeführt werden.

Die Taschen jedes der Bleche 19a, 19b und 19c sind in Reihen, die in zwei zueinander senkrechten Richtungen je parallel verlaufen, dichtest gepackt nebeneinander angeordnet. In jeder der Reihen grenzen an jede Tasche, die in eine Richtung normal zur Oberfläche des Blechs vor der Strukturierung zu ihrem Grund hin sich verjüngt, Taschen, die zu ihrem Grund hin sich in die entgegengesetzte Normalenrichtung verjüngt. Die Taschen alternieren somit in Bezug auf die Verjüngungsrichtung in jeder Reihe und der dazu jeweils senkrechten Reihe. Die ist in den Seitenansicht und den Querschnitten A-A und B-B zu jeder Fig. 9a, 9b und 9c zu erkennen.

Das Volumen jeder einzelnen Tasche beträgt die Hälfte der zu erwartenden durchschnittlichen Größe einer Schaumblase des beim Fügeschäumen aufzuschäumenden Materials. Als Volumen wird hierbei der Raum verstanden, der von den begrenzenden Seitenflächen jeder Tasche und den die Ränder der Seitenflächen verbindenden, plan gedachten Deckflächen eingeschlossen wird.

Fig. 9d zeigt einen aus einem Blechstreifen geformten Abstandshalter 19d, der zackenförmig gebogen ist, wobei die Blechabschnitte zu jedem Zacken in einem Winkel von 120° aufeinander zu weisen. Die Zacken bilden quer zum Blechstreifen offene Taschen 21d. Der Abstandshalter 19d ist an einem Ende so gebogen, dass er an einem Temperierkanal 18 klemmend befestigt werden kann. Hierfür ist der Blechanfang zu einer kreisförmigen Hülse 22 gebogen, die einen Innendurchmesser aufweist, der geringfügig kleiner als ein Außendurebmesser des Temperierkanals ist. Um den Abstandshalter 19d auf den Temperierkanal aufzuschieben, wird die Hülse 22 um ein entsprechendes Stück im elastischen Bereich aufgeweitet und dann in die gewünschte Position aufgeschoben und klemmt so auf dem Temperierkanal. Die Halterhülse 22 kann auch zwischen den Enden des Blechstreifens, insbesondere in der Mitte, ausgebildet sein, um einen Abstandshalter gleich nach zwei Seiten zu erhalten.

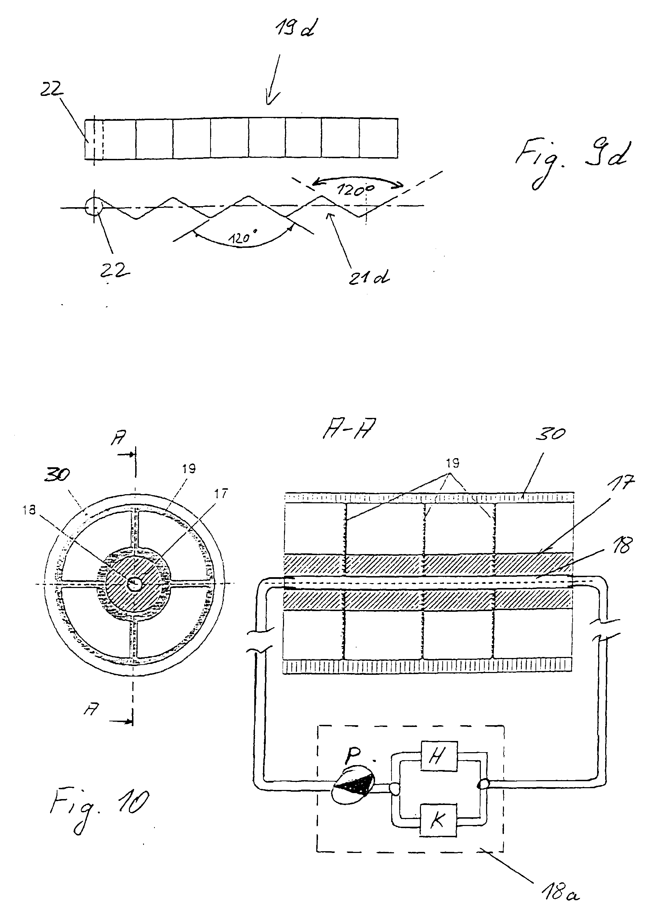

In Fig. 10 ist ein zum Ausschäumen vorbereitetes Hohlzylinderprofil 30 in einem Querschnitt und einem Längsschnitt A-A dargestellt. Das Hohlzylinderprofil 30 wird durch ein einfaches, kreisrundes Rohr mit einem einschichtigen Hohlzylindermantel aus einem metallischen Material gebildet. Zur Erhöhung der Knickfestigkeit und Biegesteifigkeit wird das Hohlzylinderprofil 30 mit einem Metallschaummaterial ausgeschäumt. Figur 10 zeigt das Hohlzylinderprofil 30 unmittelbar vor dem Ausschäumen. Hierfür wurde zuvor ein Temperierkanal 18 in Form eines im Vergleich zum Hohlzylinderprofil 30 dünnen Rohrs zentral in das Hohlzylinderprofil 30 eingeschoben. Der Temperierkanal 18 wird mittels radial von ihm abstehenden Abstandshaltern 19 in seiner konzentrischen Lage zum Hohlzylinderprofil 30 gehalten. In dieser Lage durchragt er das Hohlzylinderprofil 30.

Die Abstandshalter 19 werden durch Abstandshalterringe gebildet, die längs des Temperierkanals 18 in regelmäßigen Abständen angeordnet sind und den Temperierkanal 18 in seiner konzentrischen Lage zum Hohlzylinderprofil 30 halten. Zwischen den Abstandshaltern 19 sind Ergänzungsprofile 17 aus einem aufschäumbaren Metallschaummaterial auf dem Temperierkanal 18 aufgefädelt. Die Abstandshalter 19 sind mit dem Temperierkanal 18 gut wärmeleitend verbunden, so dass Sie als Temperierflächen zusätzlich zur derjenigen des Rohrmantels des Temperierkanals 18 wirken.

Die Abstandshalter 19 der Figur 10 werden je durch zwei plane, dünne, schmale, konzentrische Kreisringplatten mit radialen Verbindungsstegen gebildet. Stattdessen könnten auch aus den Abstandshalterblechen der Figuren 9a bis c gefertigte strukturierte Bleche verwendet werden, durch die zentral der Strömungskanal 18 geführt und deren äußerer Umfangsrand dem Innenquerschnitt des Hohlzylinderprofils 30 angepasst wird. Es könnten auch die Blechstreifen 19d der Figur 9d als Abstandshalter 19 verwendet werden, indem sie entlang des Temperierkanals 18 in einer Anzahl aufgeschoben werden, die zur gewünschten Positionierung des Strömungskanals 18 ausreicht.

An seinen offenen Stirnseiten ist der Temperierkanal 18 an eine Temperiereinrichtung 18a angeschlossen. Die Temperiereinrichtung 18a besteht im wesentlichen aus einem Heizer H und einem im Temperierkreislauf dazu parallel angeordneten Kühler K sowie einer Pumpe P. Das Temperierfluid wird in dem geschlossenen Temperierkreislauf von der Pumpe P durch eine entsprechende Rohrleitung zum Temperierkanal 18, durch den Temperierkanal 18 hindurch und über eine entsprechende Rohrleitung zu dem Heizer H oder dem Kühler K gefördert. Mittels einer Ventilsteuerung erfolgt der Kreislauf wahlweise über den Heizer H oder den Kühler K. Auf diese Weise wird eine auf das Hohlzylinderprofil 30 bei dem Aufschäumen wirkende äußere Heizung durch eine Innenheizung unterstützt. Zum kontrollierten Beenden des Aufschäumens schaltet die Temperiereinrichtung 18a von Heizen auf Kühlen um, so dass der zu diesem Zeitpunkt ausgeschäumte Innenraum des Hohlzylinderprofils 30 von innen aktiv gekühlt wird. Aufgrund der Innenheizung beim Aufschäumen kann die von außen einzutragende Wärmeenergie gegenüber einem ohne Innenheizung ausgeschäumten Hohlzylinderprofil 30 verringert werden. Vorteilhaft ist zusätzlich, dass genau derjenige Aufschäumbereich im Inneren des Hohlzylinderprofils 30 lokal erhitzt wird, der mittels eines Wärmeeintrags von außen wegen der isolierenden Wirkung des aufgeschäumten Schaummaterials zuletzt auf die für das Aufschäumen erforderliche Temperatur gebracht würde, nun unmittelbar von innen heraus erhitzt wird. Es kann hierdurch eine gleichmäßigere Porenstruktur des aufgeschäumten Schaummaterials im Inneren des Hohlzylinderprofils 30 erzielt werden.

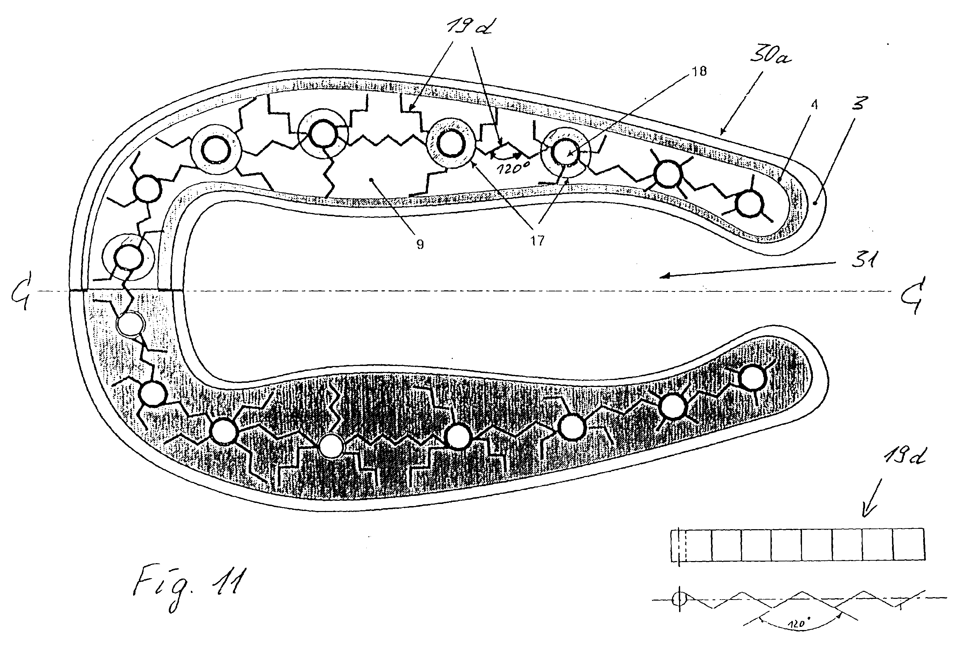

Fig. 11 zeigt ein im Querschnitt hufeisenförmiges Hohlprofil 30a aus Leichtmetall für einen Mast einer Segeljacht. Der durch die Hufeisenform erhaltene Innenraum 31 des Hohlprofils 30a dient als Aufnahme für ein aufrollbares Segel. Das Hohlprofil 30a weist einen allseitig umschlossenen Hohlraum 9 auf. Zur Versteifung des Hohlprofils 30a wird der Hohlraum 9 mit einem Metallschaummaterial ausgeschäumt.

In einem Bereich zu einer Seite einer Mittellängsebene C-C ist das Hohlprofil 30a unmittelbar vor einem Aufschäumen und in dem Bereich zur anderen Seite der Mittellängsebene C-C nach dem Aufschäumen dargestellt.

Das Hohlprofil 30a wird aus einem Plattenhalbzeug in die Hufeisenform kaltverformt. Dabei wird gleichzeitig auch der umschlossene Hohlraum 9 gebildet. Als Plattenhalbzeug dient ein beispielsweise mittels Strangpressen, insbesondere mittels hydrostatischem Strangpressen, erhaltener Schlichtverbundwerkstoff bestehend aus einer vollmetallischen Deckschicht 3 und einer Schicht 4 aus einem mit dem Deckschichtmaterial metallurgisch verträglichen, aufschäumbaren Metallschaummaterial. Die Deckschicht 3 umhüllt nach dem Formen des Hohlprofils 30 die dann innenliegende Aufschäumschicht 4. Die nach dem Formen aneinander stoßenden Enden des Plattenhalbzeugs können vorteilhafterweise mittels der vorstehend beschriebenen Fügeverbindung fest miteinander verbunden sein. Andere Verbindungen sollen jedoch nicht ausgeschlossen sein, bespielsweise eine Schweißverbindung.

Im nächsten Schritt werden in den langgestreckten, hufeisenförmigen Hohlraum 9 als Röhrchen ausgebildete Temperierkanäle 18 eingeschoben. Auf den Temperierkanälen 18 sind je mehrere der Abstandshalter 19d der Fig. 9d aufgeklemmt. Einige der Abstandshalter 19d sind an beiden Enden mit Klemmhülsen 22 versehen und gleichzeitig auf benachbarte Paare von Temperierkanälen 18 geldemmt. Es wird so ein zusammenhängendes Temperiergebilde erhalten, das aufgrund seiner Flexibilität beliebigen Hohlraumformen anpassbar ist. Die Abstandshalter 19d halten die Temperierkanäle 18 im Hohlraum 9 an den gewünschten Positionen. Die Temperierkanäle 18 sind an denjenigen Stellen mit Ergänzungsprofilen 17 aus aufschäumbarem Metallschaummaterial umgeben, wo die Aufschäumschicht 4 des Hohlprofils 30 nicht ausreicht ist, um den Hohlraum 9 völlig auszuschäumen. Die Ergänzungsprofile 17 sind nach der schon in vorherigen Anwendungsbeispielen beschriebenen 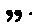 Schaschlikmethode" abwechselnd mit Abstandshaltern 19d auf die Temperierkanäle 18 aufgefädelt.

Zum Aufschäumen wird das Hohlprofil 30 in einem Ofen verbracht. Die Temperierkanäle 18 dienen zum Durchleiten eines Kühlfluids zum kontrollierten Beenden des Aufschäumens. Es kann mittels der Kanäle 18 unterstützend zum Wärmeeintrag von außen auch Wärme von innen in das Schaummaterial eingetragen werden, um ein gleichmäßigeres oder auch nur rascheres Aufschäumen zu ermöglichen. Es kann der Wärmeeintrag zum Aufschäumen auch allein mittels der Temperierkanäle erfolgen und so auf einen Ofen gänzlich verzichtet werden.

Der untere Teil des Querschnitts in Fig. 11 zeigt das Hohlprofil 30 nach dem Aufschäumvorgang. Der Hohlraum 9 ist vollständig und gleichmäßig mit dem aufgeschäumten Schaummaterial ausgefüllt. Durch das Ausschäumen wird eine wesentliche Erhöhung der Festigkeit des Hohlprofils 30 erreicht. Insbesondere die Knickfestigkeit und Biegesteifigkeit werden im Vergleich zu einem nicht ausgeschäumten Hohlprofil aus gleichem Material und gleichem Gewicht wesentlich verbessert.

## Patentansprüche

1. Metallschaumfügeverfahren zum Verbinden von Formkörpern, bei dem
a) ein erster Formkörper (1) und ein zweiter Formkörper relativ zueinander (2) fixiert werden,
b) mittels einer Fügeklammer (10; 10a) in einem Fügebereich der Formkörper (1, 2) eine Umschalung eines Raums (9) gebildet wird, in dem aufschäumbares Metallschaummaterial (4; 15; 17) angeordnet ist, und bei dem
c) das Metallschaummaterial (4; 15; 17) in die Umschalung aufgeschäumt wird und dadurch die Formkörper (1, 2) zu einem Verbundkörper verpresst werden.

2. Metallschaumfügeverfahren nach Anspruch 1, dadurch gekennzeichnet, dass an die Formkörper (1, 2) eine separate Fügeklammer (10) angelegt und dadurch die Unischalung gebildet wird.

3. Metallschaumfügeverfahren nach einem der vorhergehenden Ansprüche, dadurch gekennzeichnet, dass
- an jedem Formkörper (1, 2) wenigstens ein Anschlussprofil (6) ausgebildet wird,
- die Formkörper (1, 2) mit ihren Anschlussprofilen (6) aneinander gelegt werden und
- eine separate Fügeklammer (10) die Anschlussprofile (6) umgreifend angelegt wird oder ein Anschlussprofil (6) eines Formkörpers (1, 2) ein Anschlussprofil (6) eines anderen Formkörpers (1, 2) umgreift und dadurch die Fügeklammer (10a) und die Umsehalung gebildet werden.

4. Metallschaumfügeverfahren nach einem der vorhergehenden Ansprüche, dadurch gekennzeichnet, dass aufschäumbares Metallschaummaterial in Form eines Ergänzungsprofils (17) in den umschalten Raum (9) eingebracht wird.

5. Metallschaumfügeverfahren nach einem der vorhergehenden Ansprüche, dadurch gekennzeichnet, dass das Metallschaummaterial mittels einer in dem umschalten Raum (9) angeordneten Temperiereinrichtung (18) von innen temperiert wird.

6. Metallschaumfügeverfahren nach einem der vorhergehenden Ansprüche, dadurch gekennzeichnet, dass das Metallschaummaterial (4; 15; 17) bei dem Aufschäumen durch einen Strömungskanal (18), der in dem umschalten Raum (9) angeordnet ist, mit einem Fluid beaufschlagt wird, das eine oxidative Wirkung eines Treibmittels auf das Metallschaummaterial verringert oder verstärkt.

7. Verbund von Formkörpern mit Metallschaummaterial, dadurch gekennzeichnet, dass die Formkörper (1, 2) mittels einer Fügeklammer (10; 10a) zusammengefügt sind, die eine Umschalung für das bei dem Herstellen des Verbunds aufgeschäumte Metallschaummaterial (4, 12, 20, 4; 15; 17) bildet und dadurch die Formkörper (1, 2) zu dem Verbund verpresst.

8. Verbund nach Anspruch 7, dadurch gekennzeichnet, dass von jedem Formkörper (1, 2) wenigstens ein Anschlussprofil (6) abragt, das von der Fügeklammer (10: 10a) umgriffen wird.

9. Verbund nach dem vorhergehenden Anspruch, dadurch gekennzeichnet, dass ein Anschlussprofil (6) für seinen Formkörper (1, 2) eine Verankerung im Pressverbund bildet.

10. Verbund nach einem der Ansprüche 7 bis 9, dadurch gekennzeichnet, dass in dem aufgeschäumten Metallschaummaterial wenigstens ein Kanal (18) mit einem zur Durchleitung eines Fluids ausreichenden Querschnitt ausgebildet ist.

11. Fügeklammer mit einem Hohlzylinderprofil, dadurch gekennzeichnet, dass die Fügeklammer (10) in ihrem Hohlzylinderprofil (11) eine Schicht (15) eines aufschäumbaren Metallschaummaterials und eine diese Aufschäumschicht (15) außenseitig einschalende Deckschicht (14) aufweist.

12. Fügeklammer nach Anspruch 11, dadurch gekennzeichnet, dass das Hohlzylinderprofil (11) eine Öffnung (12) aufweist.

13. Fügeklammer nach dem vorhergehenden Anspruch, dadurch gekennzeichnet, dass die Öffnung (12) in Längsrichtung des Hohlzylinderprofils (11) verläuft und sich zumindest bis zu einem Ende des Hohlzylinderprofils (11) erstreckt.

14. Fügeklammer nach einem der Ansprüche 11 bis 13, dadurch gekennzeichnet, dass an dem Hohlzylinderprofil (11) ein Stützprofil (13; 13a) zur Auflage der Fügeklammer (10) auf einen der Formkörper (1, 2) ausgebildet ist.
